# EUROPEAN PATENT SPECIFICATION

(11) **EP 3 857 962 B1**
(45) Date of publication and mention of the grant of the patent: **18.02.2026**
(21) Application number: 19866419.5
(22) Date of filing: 11.09.2019
(51) Int. Cl.: H04W 36/00, H04W 36/36

(54) **DATA FORWARDING HANDLING FOR CONDITIONAL HANDOVER**
DATENWEITERLEITUNGSHANDHABUNG FÜR BEDINGTE ÜBERGABE
GESTION DE TRANSFERT DE DONNÉES POUR TRANSFERT INTERCELLULAIRE CONDITIONNEL

(30) Priority: 27.09.2018 US 201862737512 P
(43) Date of publication of application: 04.08.2021
(73) Proprietor: INTEL Corporation, Santa Clara, CA 95054 (US)
(72) Inventor: HAN, Jaemin, Portland, Oregon 97229 (US); YIU, Candy, Portland, Oregon 97201 (US); GUO, Yi, Shanghai 201801 (CN)
(74) Representative: Goddar, Heinz J.
(86) International application number: PCT/US2019/050614
(87) International publication number: WO 2020/068424

(56) References cited:
- WO-A1-2016/130062
- ASTRI ET AL: "Discussion on Conditional Handover in NR", vol. RAN WG2, no. Athens, Greece; 20180226 - 20180302, 12 February 2018 (2018-02-12), XP051398939, Retrieved from the Internet <URL:http://www.3gpp.org/ftp/tsg%5Fran/WG2%5FRL2/TSGR2%5F101/Docs/> [retrieved on 20180212]
- SAMSUNG ET AL: "Remaining essential issue for NR SA Handover", vol. RAN WG2, no. Busan, Korea; 20180521 - 20180525, 11 May 2018 (2018-05-11), XP051519878, Retrieved from the Internet <URL:http://www.3gpp.org/ftp/tsg%5Fran/WG2%5FRL2/TSGR2%5F102/Docs/R2%2D1808482%2Ezip> [retrieved on 20180511]
- SAMSUNG: "Introduction of Conditional handover", vol. RAN WG2, no. Athens, Greece; 20180226 - 20180302, 14 February 2018 (2018-02-14), XP051399211, Retrieved from the Internet <URL:http://www.3gpp.org/ftp/tsg%5Fran/WG2%5FRL2/TSGR2%5F101/Docs/> [retrieved on 20180214]
- HUAWEI ET AL: "Overview of Mobility enhancement for NR", vol. RAN WG2, no. Hangzhou, China; 20170515 - 20170519, 14 May 2017 (2017-05-14), XP051275368, Retrieved from the Internet <URL:http://www.3gpp.org/ftp/Meetings_3GPP_SYNC/RAN2/Docs/> [retrieved on 20170514]
- LG ELECTRONICS INC: "Conditional handover procedure", vol. RAN WG2, no. Athens, Greece; 20180226 - 20180302, 14 February 2018 (2018-02-14), pages 1 - 3, XP051399297, Retrieved from the Internet <URL:http://www.3gpp.org/ftp/tsg%5Fran/WG2%5FRL2/TSGR2%5F101/Docs/> [retrieved on 20180214]
- HUAWEI ET AL: "Analysis on conditional handover", vol. RAN WG2, no. Spokane, USA; 20170403 - 20170407, 3 April 2017 (2017-04-03), XP051245246, Retrieved from the Internet <URL:http://www.3gpp.org/ftp/Meetings_3GPP_SYNC/RAN2/Docs/> [retrieved on 20170403]
- INTEL CORPORATION: "Analysis of conditional handover", vol. RAN WG2, no. Spokane, USA; 20170403 - 20170407, 3 April 2017 (2017-04-03), XP051245271, Retrieved from the Internet <URL:http://www.3gpp.org/ftp/Meetings_3GPP_SYNC/RAN2/Docs/> [retrieved on 20170403]
- ASTRI ET AL.: "Discussion on Conditional Handover in NR", R2-1802008, 3GPP TSG RAN WG2 #101, 12 February 2018 (2018-02-12), Athens, Greece, XP051398939
- SAMSUNG: "Introduction of Conditional handover", R2-1802486, 3GPP TSG RAN WG2 #101, 14 February 2018 (2018-02-14), Athens, Greece, XP051399211
- HUAWEI ET AL.: "Discussion on mobility in connected mode for NR-U", R2-1812661, 3GPP TSG RAN WG2 #103, 10 August 2018 (2018-08-10), Gothenburg, Sweden, XP051522255
- "Conditional handover procedure", R2-1802693, 3GPP TSG RAN WG2 #101, 14 February 2018 (2018-02-14), Athens, Greece, XP051399297

## Description

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks. Other aspects are directed to systems and methods for conditional handover in wireless networks.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in a number of disparate environments. Fifth-generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as well as unlicensed spectrum is expected in future releases and 5G systems. Such enhanced operations can include techniques for data forwarding handling for conditional handover in wireless networks.

3GPP Toc. R2-1802008, "Discussion on Conditional Handover in NR", 3GPP TSG-RAN WG2 Meeting 101, March 2018, focuses on a conditional handover procedure which ensures that the Source gNB (SgNB) is made aware of whether the UE has performed a handover to a Target gNB (TgNB) in response to a conditional handover command from the SgNB.

3GPP Toc. R2-1802486, "Introduction of Conditional handover", 3GPP TSG-RAN WG2 Meeting 101, March 2018, suggests the following conditional handover call flow: A serving cell might have the information on the possible target cell which can be obtained through UE's measurement report (MR) a priori. Serving cell that received MR from UE finds the candidate target cells, and requests HO preparation to the target cell indicated in MR or requests leaving from target candidate cell list. Once serving cell receives HO preparation response, serving cell gives the Conditional HO-dedicated event configuration and target cell access information through RRCConnectionReconfiguration message with the mobilityControlInfo IE. Still UE communicates with the serving cell. After some time, UE suffers from the sudden link drop and this drop is caught by the UE HO dedicated event, then UE directly synchronizes to the target cell through the RACH operation without MR to the serving cell. Then if UE has the UL grant from the target cell, it sends access request message to the target cell and target cell responds to the UE with corresponding response message. After the successful connection noticed by the target cells, data forwarding from the source cell to the target cell is done and data transmission is resumed between the target cell and UE.

3GPP Toc. R2-1808482, "Remaining essential issue for NR SA Handover", 3GPP TSG-RAN WG2 Meeting 102, May 2018, summarizes the positions of different 3GPP members on different discussion topics related to conditional handover procedures in 3GPP NR.

3GPP Toc. R2-1703415, "Analysis of conditional handover", 3GPP TSG-RAN WG2 Meeting 97bis, April 2027, provides a further study of the detail of conditional handover and provide performance evaluation.

### SUMMARY

The invention is defined by the subject matter of the independent claims. Advantageous embodiments are subject to the dependent claims.

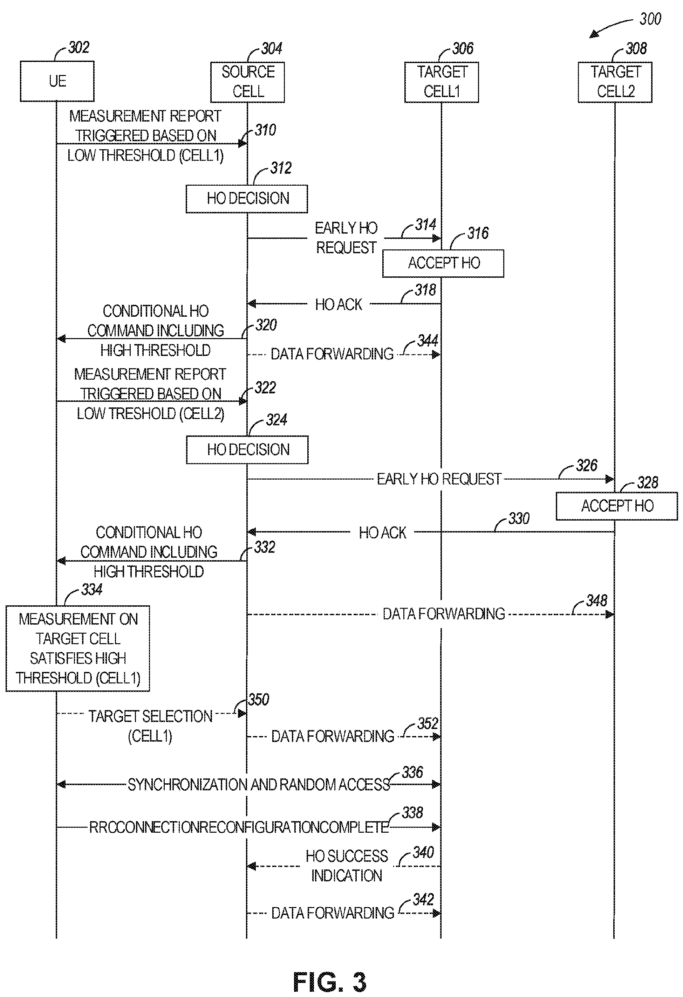

In the following description, the invention is described with particular reference to figure 3, while the description of the remaining figures is provided for illustrative purposes for a better understanding of the invention.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 illustrates a swimlane diagram of a conditional handover, in accordance with some aspects.
FIG. 3 illustrates a swimlane diagram of a conditional handover with more than one target cells and options for data forwarding, in accordance with some aspects.
FIG. 4 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in or substituted for, those of other aspects.

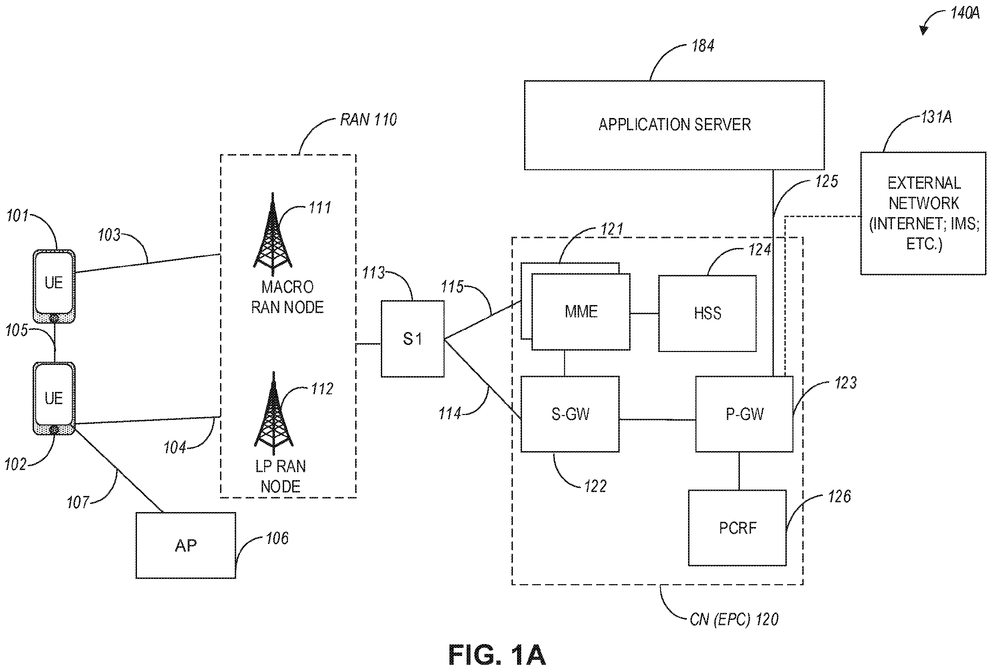

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of high-speed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation Node-B (gNB), an evolved node-B (eNB), or another type of RAN node.

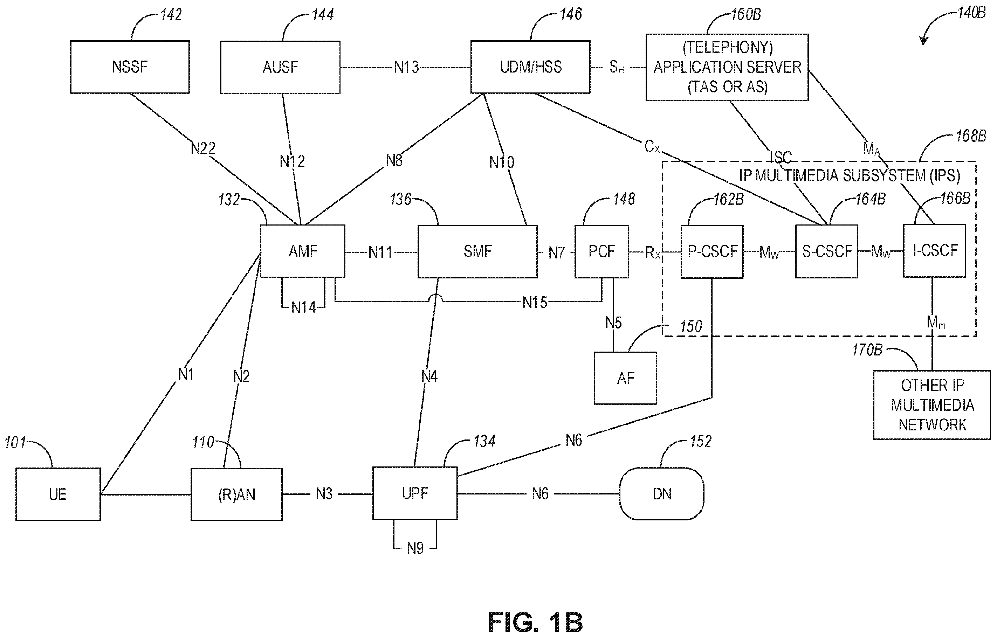

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1I). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network. One of the current enablers of IoT is the narrowband-IoT (NB-IoT).

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, UE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1E can also be used.

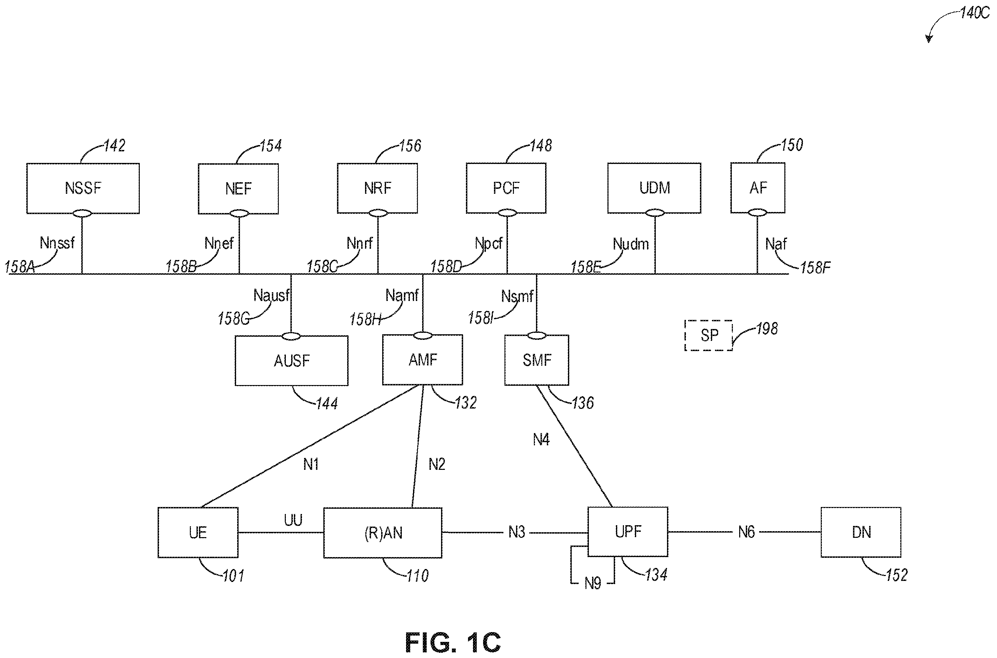

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

In some aspects associated with conditional handover (HO), multiple potential target cells can be prepared among which the UE is configured to choose a final target cell for HO. This framework impacts on legacy data forwarding. In LTE, the source freezes downlink (DL) / uplink (UL) communications with the UE and initiates data forwarding at any time after sending RRC Reconfiguration including a HO command (CMD) to the UE (as the target node to which data can be forwarded is already decided and known to the source cell). However, in conditional HO, multiple candidates (e.g., multiple target cells) over multiple nodes can be prepared (meaning that HO preparation and HO CMD configuration to the UE are done for each candidate target cell), where the final target cell is chosen as the one that the UE successfully attaches to. As a result, the source cell could lack knowledge on which target cell the UE has attached to and, consequently, the source cell may not be able to follow the legacy data forwarding behavior after the source cell communicates the HO CMD.

Techniques discussed herein can be used to enable data forwarding when the conditional HO is used and multiple potential target cells over one or multiple nodes are prepared for a UE (e.g., as illustrated and discussed in connection with FIG. 3). More specifically, the following techniques may be used to enable data forwarding in a conditional HO:

(a) In some aspects, the final target node sends a notification to the source when the UE has successfully attached so that the source can initiate data forwarding: a straightforward solution with impacting NW signalling only (no UE impact) but there could be some interruption as data may not be ready (not forwarded yet) on the target side.

(b) In some aspects, the source cell (also referred to as the source) performs data forwarding to potential target nodes: a brute-force solution applying the legacy forwarding behavior to each potential target (no stage-3 impact foreseen), but waste of X2-U or Xn-U resources is expected as data forwarded to non-selected target node(s) may become useless. In some aspects, forwarding can be performed to some candidate target cells, not necessarily all target cells.

(c) In some aspects, the UE informs to the source "which target" it will connect to before disconnecting from the source and attaching to the target: a UE-based solution that enables the source to follow the legacy data forwarding behavior as the source can know to which target node it should forward data to before the UE is disconnected. This solution may be unreliable as the signal quality between the UE and the source cell is expected to be poor around the time when the UE disconnects from the source.

(d) In some aspects, both the final target node and the UE signal the source (this technique is a hybrid of techniques (a) and (c)). In some aspects, at least the final target will signal to the source with the tradeoff of delay. But in aspects when the UE signals the source, the delay may be minimalized.

(e) In some aspects, the source performs data forwarding to some target nodes based on information from the UE before disconnecting from the source and attaching to the target (a hybrid of techniques (b) and (c) that could help the source to narrow down the nodes to forward data to). Additional information regarding techniques (a) - (e) is discussed in connection with FIG. 3.

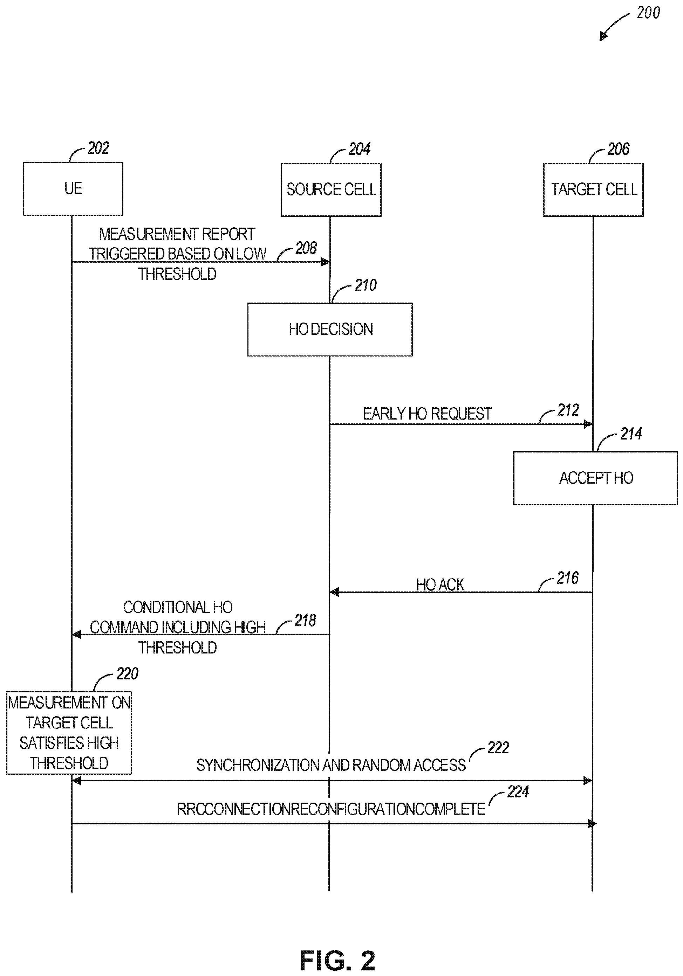

FIG. 2 illustrates a swimlane diagram 200 of a conditional handover, in accordance with some aspects. FIG. 2 shows the signaling flow of the basic conditional handover between a UE 202, a source cell 204, and a target cell 206. The key idea is to configure a "lower" threshold for one or more measurement events, to trigger early measurement report to the serving cell. Then the serving cell 204 will prepare the target cell and forward the handover command to the UE with a "higher" threshold for the measurement event to increase the reliability of the handover command. When the "higher" threshold condition is met, the UE will trigger handover (synchronization to the target cell and a random access procedure) to the target cell 206. One of the issues associated with handover failure (HOF) is the failure in the delivery of the HO command. In conditional handover (e.g., as illustrated in FIG. 2), the measurement report is triggered based on a lower threshold, therefore, the HO command delivery will be more reliable.

Referring to FIG. 2, at operation 208, a measurement report is triggered based on a lower threshold for a measurement event. The measurement event, as well as the associated low threshold, can be configured prior to operation 208, by the source cell 204. At operation 210, the source cell 204 can make a handover decision based on the received measurement report. At operation 212, the source cell 204 communicates a handover request to the target cell 206. The handover request can include a request for conditional handover based on a higher threshold (i.e., a threshold that is higher than the low threshold configured for the measurement report in operation 208). At operation 214, the target cell 206 accepts the handover request. At operation 216, the target cell 206 communicates a handover acknowledgment to the source cell 204. The handover acknowledgment can include a conditional handover command including a high threshold for a measurement event (e.g., the measurement event used for triggering the measurement report in operation 208). At operation 218, the source cell 204 communicates a conditional handover command (e.g., the conditional handover command received with the handover acknowledgment at operation 216) together with the high threshold to the UE 202. At operation 220, the UE 202 performs a measurement on the target cell 206 which satisfies the high threshold communicated with the conditional handover command. At operation 222, synchronization and random access procedure can take place between the UE 202 and the target cell 206. At operation 224, the UE can communicate a handover completion message, such as RRC Connection Reconfiguration Complete message.

In some aspects, conditional handover may increase the reliability of HO command delivery by early event triggering. FIG. 2 illustrates a simpler case of conditional HO where there is only one target cell triggering the UE to send the measurement report, with the UE eventually triggering HO when the "higher" threshold is met. FIG. 3 illustrates a different communication environment where more than one target cells triggered the UE to send the measurement report.

FIG. 3 illustrates a swimlane diagram of a conditional handover with more than one target cells and options for data forwarding, in accordance with some aspects. FIG. 3 shows a communication sequence where multiple potential target cells were triggered by a "lower" threshold and hence measurement reports were sent by the UE. Multiple target cells preparation will be required along with multiple HO commands were sent to the UE. Therefore, more signaling overhead in conditional handover due to multiple measurement report, preparation, and HO commands may be used in connection with FIG. 3.

FIG. 3 shows conditional handover signaling flow 300 where multiple potential target cells (e.g., a first target cell 306 and a second target cell 308) may trigger the UE 302 to sends measurement reports to the source cell 304. In conditional handover, a "lower" threshold is configured to the UE to trigger early measurement reporting. After the serving cell 304 reserves the resource (e.g., prepares the target cell), the HO command will be sent to the UE 302 along with a "higher" threshold configuration for one or more measurement events (which may be configured together with the "lower" threshold). Multiple HO commands may be sent to the UE due to multiple potential target cell satisfying the "lower" threshold. This results in multiple target cells preparation and, therefore, more signaling overhead in the air interface and the X2 or Xn interface due to communication of multiple measurement reports, preparation, and HO commands.

Referring to FIG. 3, at operation 310, a measurement report (for the first target cell 306) is triggered based on a lower threshold for a measurement event. The measurement event, as well as the associated low threshold, can be configured prior to operation 310, by the source cell 304. More specifically, prior to operation 310, the network configures a low threshold in measurement configuration along with the measurement event to the UE. At operation 310, the UE sends the measurement report when the event is triggered. i.e. one or more cells satisfy the low threshold configuration.

At operation 312, the source cell 304 can make a handover decision for handover to the first target cell 306 based on the received measurement report at operation 310.

At operation 314, the source cell 304 communicates a handover request to the first target cell 306. The handover request can include a request for conditional handover based on a higher threshold (i.e., a threshold that is higher than the low threshold configured for the measurement report in operation 310). The serving cell 304 sends the early HO request to the target cell (e.g., 306) to reserve resource to the UE. This signaling may include a conditional HO request to check if the target cell supports conditional HO (this feature is currently not supported in legacy HO).

At operation 316, the first target cell 306 accepts the handover request.

At operation 318, the first target cell 306 communicates a handover acknowledgment to the source cell 304. The handover acknowledgment can include a conditional handover command including a high threshold for a measurement event (e.g., the measurement event used for triggering the measurement report in operation 310).

In some aspects, at operation 318, the target cell (e.g., 306) sends either an HO acknowledgment (ACK) or reject to the serving cell based on the support of conditional HO. In case of HO ACK, signaling at operation 318 may include the following: a HO command including a RACH resource (contention-free RACH preamble); a timer to indicate how long the RACH resource can be valid; an offset to indicate when the UE may exit the conditional HO; a high threshold for the conditional handover to execute; and a time-to-trigger (TTT) parameter for this condition, where the measurement has to satisfy the high threshold for TTT amount of time.

At operation 320, the source cell 304 communicates a conditional handover command and further signaling to the UE 302. In accordance with the embodiments of this invention, the signaling at operation 320 includes a HO command including a RACH resource (contention-free RACH preamble); a timer to indicate how long the RACH resource can be valid; an offset to indicate when the UE may exit the conditional HO; a high threshold for the conditional handover to execute; and a time-to-trigger (TTT) parameter for this condition, where the measurement has to satisfy the high threshold for TTT amount of time (e.g., the conditional handover command received from the first target cell 306 with the handover acknowledgment at operation 318 is forwarded) .

Once the UE receives the conditional HO command at operation 320, the UE maintains a connection with the source/serving cell 304. If the high threshold is satisfied with the configured target cell, the UE disconnects with the serving cell and performs a RACH procedure to the target cell to complete the HO. If the timer expired in the HO command, the UE discards the HO command and the target cell releases the resources. If an exit condition is satisfied, the UE sends an exit indication to the serving cell for the configured target cell.

At operation 322, a measurement report (for the second target cell 308) is triggered based on a lower threshold for a measurement event. The measurement event, as well as the associated low threshold, can be configured prior to operation 322, by the source cell 304.

At operation 324, the source cell 304 can make a handover decision for handover to the second target cell 308 based on the received measurement report at operation 310.

At operation 326, the source cell 304 communicates a handover request to the second target cell 308. The handover request can include a request for conditional handover based on a higher threshold (i.e., a threshold that is higher than the low threshold configured for the measurement report in operation 322).

At operation 328, the second target cell 308 accepts the handover request.

At operation 330, the second target cell 308 communicates a handover acknowledgment to the source cell 304. The handover acknowledgment can include a conditional handover command including a high threshold for a measurement event (e.g., the measurement event used for triggering the measurement report in operation 322).

At operation 332, the source cell 304 communicates a conditional handover command (e.g., the conditional handover command received from the second target cell 308 with the handover acknowledgment at operation 330) together with the high threshold to the UE 302.

At operation 334, the UE 302 performs a measurement on one or more of the target cell and determines that measurement in a configured measurement event for the first target cell 306 satisfies the high threshold communicated with the conditional handover command (e.g., at operation 320).

At operation 336, synchronization and random access procedure can take place between the UE 302 and the first target cell 306. At operation 338, the UE 302 can communicate a handover completion message to the first target cell 306, such as an RRC Connection Reconfiguration Complete message.

After operation 338, the target cell 306 sends an HO complete message to the serving cell to indicate the HO is completed. The serving cell 304 sends a resources release message to all other configured target cells so that they can release the resources they are holding for UE 302.

In the first aspect of data forwarding in connection with conditional HO, the final target node (cell) sends a notification to the source cell when the UE has successfully attached so that the source cell can initiate data forwarding. For example, after operation 338, at operation 340, the final target cell (e.g., 306) communicates an HO success indication to the source cell 304 (e.g., indicating the UE has completed the HO and has attached to the target cell 306). At operation 342, the source cell 304 can perform data forwarding to the target cell 306 of any UL data received from the UE (e.g., UL data that has been received but held at the source cell after communication of the HO command at operation 332) or DL data for the UE (e.g., data that has been held at the source cell for communication to the UE).

This solution is to let the final target cell notify the source cell to which node the source should forward data to. The target can indicate the source as soon as the UE successfully attaches, possibly before or at the same time when initiating path switch, to minimize service interruption. This technique has no UE impact. Even if the notification from the target cell happens right after the UE attaches, there could be some interruption as data may not be ready (not forwarded yet) on the target side. The target cell can use X2AP or XnAP signaling to notify the source cell.

In the second aspect of data forwarding in connection with conditional HO, the source cell 304 performs data forwarding to potential target nodes. The source cell may perform the legacy forwarding behavior to each potential target nodes in a brute-force way since the source cell does not know exactly which target cell the UE is going to attach to. For example, after operation 320, the source cell can perform data forwarding of UE's UL or DL data to the target cell 306 (which is known to the source cell), at operation 344. After operation 332, the source cell 304 can further perform data forwarding to target cell 308 (at operation 348).

This technique has no UE or network impacts. The data forwarding can be adapted to each potential target based on admission result. In some aspects, no interruption may be expected because the source cell in effect follows the legacy data forwarding behavior to each potential target cell. In some aspects, the source cell may not necessarily need to forward the data to all candidates; the source cell can forward data to some of the target cell candidates instead. This technique may extensively use X2-U or Xn-U resources as data is forwarded to the non-selected target node(s), which data becomes useless when forwarding takes place to non-selected target nodes.

In the third aspect of data forwarding in connection with conditional HO, the UE 302 informs to the source cell 304 which target cell the UE will connect to, before disconnecting from the source cell and attaching to the target cell. For example, after the measurements are performed at operation 334 (leading to the selection of target cell 306), the UE notifies the source cell 304 of the selection of target cell 306 (at operation 350). The source cell 304, at operation 352, then performs data forwarding to the target cell (306) indicated by the UE at operation 350.

This technique is based on having the UE inform the source cell of the final target cell that the UE is going to attach to, before disconnecting from the source cell. This technique enables the source cell to follow the legacy data forwarding behavior as the source cell can know to which target cell it should forward the data before the UE is disconnected.

This technique has no network impact, and no interruption may be expected as the source cell can follow the legacy data forwarding behavior. The signal quality between the UE and the source cell may be poor around the time when the UE disconnects from the source cell, thus in some aspects, the UE indication may fail to be delivered. RRC signaling from the UE may be used to inform the source about the final target cell or node.

In the fourth aspect of data forwarding in connection with conditional HO, both the final target node and the UE signal the source cell. This technique is a hybrid of the first and third techniques discussed above, because, sometimes, the UE may not have enough power (or may experience high interference) to send a message to the source cell during the handover. In this case, at least the final target cell will signal to the source cell (with the tradeoff of delay). In aspects when the signaling is performed by the UE, the delay will be minimized.

In the fifth aspect of data forwarding in connection with conditional HO, the source cell performs data forwarding to potential target cells based on information from the UE, received at the source cell before the UE disconnects from the source cell and attaches to the target cell. For example, the UE may send information on target cells that are highly likely to be selected for handover (e.g., based on multiple cell measurements of the target cells or another criteria), and the source cell may forward the data to the indicated likely target cells (which may be a subset of all the candidate target cells). This technique is a hybrid of the second and third techniques above, and may help the source cell to narrow down the nodes to forward data to, among all potential target nodes, based on the information from the UE (e.g., measurement-based information for the target cells), which information the UE can be configured to send before disconnecting from the source cell and attaching to the target cell.

In some aspects, an apparatus to be employed as an evolved Node-B (eNB) or a next generation Node-B (gNB) (i.e., a source node) interconnecting an eNB or a gNB (i.e., a potential target node) via X2 or Xn interfaces, includes means to support conditional HO and data forwarding for a specific UE. The source node performs data forwarding to all or some potential target nodes, possibly based on information provided by the UE or for which the UE can be configured to send (e.g., measurement-based) before disconnecting from the source and attaching to a target node. The source node initiates data forwarding, either upon receiving notification signaling from the target node when the UE has successfully attached or upon receiving signaling from the UE that indicates which target node the UE will connect to before the UE is disconnected from the source and attaches to the target.

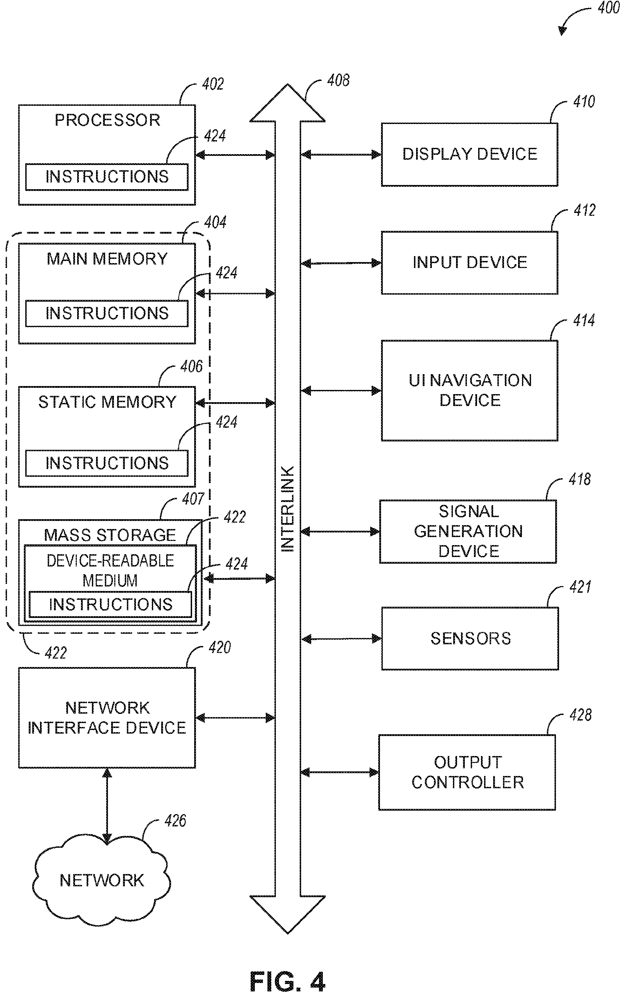

FIG. 4 illustrates a block diagram of a communication device such as an evolved Node-B (eNB), a next generation Node-B (gNB), an access point (AP), a wireless station (STA), a mobile station (MS), or a user equipment (UE), in accordance with some aspects and to perform one or more of the techniques disclosed herein. In alternative aspects, the communication device 400 may operate as a standalone device or may be connected (e.g., networked) to other communication devices.

Circuitry (e.g., processing circuitry) is a collection of circuits implemented in tangible entities of the device 400 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 400 follow.

In some aspects, the device 400 may operate as a standalone device or may be connected (e.g., networked) to other devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

Communication device (e.g., UE) 400 may include a hardware processor 402 (e.g., a central processing unit (CPU), a graphics processing unit (GPU), a hardware processor core, or any combination thereof), a main memory 404, a static memory 406, and mass storage 407 (e.g., hard drive, tape drive, flash storage, or other block or storage devices), some or all of which may communicate with each other via an interlink (e.g., bus) 408.

The communication device 400 may further include a display device 410, an alphanumeric input device 412 (e.g., a keyboard), and a user interface (UI) navigation device 414 (e.g., a mouse). In an example, the display device 410, input device 412 and UI navigation device 414 may be a touchscreen display. The communication device 400 may additionally include a signal generation device 418 (e.g., a speaker), a network interface device 420, and one or more sensors 421, such as a global positioning system (GPS) sensor, compass, accelerometer, or another sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 407 may include a communication device-readable medium 422, on which is stored one or more sets of data structures or instructions 424 (e.g., software) embodying or utilized by any one or more of the techniques or functions described herein. In some aspects, registers of the processor 402, the main memory 404, the static memory 406, and/or the mass storage 407 may be, or include (completely or at least partially), the device-readable medium 422, on which is stored the one or more sets of data structures or instructions 424, embodying or utilized by any one or more of the techniques or functions described herein. In an example, one or any combination of the hardware processor 402, the main memory 404, the static memory 406, or the mass storage 416 may constitute the device-readable medium 422.

As used herein, the term "device-readable medium" is interchangeable with "computer-readable medium" or "machine-readable medium". While the communication device-readable medium 422 is illustrated as a single medium, the term "communication device-readable medium" may include a single medium or multiple media (e.g., a centralized or distributed database, and/or associated caches and servers) configured to store the one or more instructions 424. The term "communication device-readable medium" is inclusive of the terms "machine-readable medium" or "computer-readable medium", and may include any medium that is capable of storing, encoding, or carrying instructions (e.g., instructions 424) for execution by the communication device 400 and that cause the communication device 400 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 424 may further be transmitted or received over a communications network 426 using a transmission medium via the network interface device 420 utilizing any one of a number of transfer protocols. In an example, the network interface device 420 may include one or more physical jacks (e.g., Ethernet, coaxial, or phone jacks) or one or more antennas to connect 0to the communications network 426. In an example, the network interface device 420 may include a plurality of antennas to wirelessly communicate using at least one of single-input-multiple-output (SIMO), MIMO, or multiple-input-single-output (MISO) techniques. In some examples, the network interface device 420 may wirelessly communicate using Multiple User MIMO techniques.

The term "transmission medium" shall be taken to include any intangible medium that is capable of storing, encoding or carrying instructions for execution by the communication device 400, and includes digital or analog communications signals or another intangible medium to facilitate communication of such software. In this regard, a transmission medium in the context of this disclosure is a device-readable medium.

## Claims

1. An apparatus for use in a user equipment, UE, the apparatus comprising:
processing circuitry (402), wherein to configure the UE (302) for conditional handover and data forwarding between a source base station, SBS (304), and a target base station, TBS (306), in a wireless network, the processing circuitry (402) is to:
encode (310) a measurement report for transmission to the SBS (304);
decode (320; 332) radio resource control, RRC, signaling from the SBS (304), the RRC signaling including a timer and a conditional handover command, the handover command including a random access channel, RACH, resource;
perform (334) a handover from the SBS (304) to the TBS (306) based on the conditional handover command after detecting that the measurement event satisfies a second threshold; and
encode (350) a notification message for transmission to the SBS (304) prior to performing a random access, RACH, procedure (336) and attaching to the TBS (306), the notification message indicating that the UE (302) has selected the TBS (306) for the handover, triggering the SBS (304) to forward (352) UE (302) uplink, UL, data or UE (302) downlink, DL, data to the TBS (306); and
perform a RACH procedure with the TBS (306) during the handover, using the RACH resource;
**characterized in that**
the measurement report triggered is based on a first threshold associated with a measurement event configured by the SBS (304);
wherein the RRC signaling further includes:
the second threshold for the measurement event, the second threshold being higher than the first threshold,
an offset to indicate when the UE may exit the conditional handover; and
a time-to-trigger parameter for a condition, where the measurement has to satisfy the second threshold for a time-to-trigger amount of time; and
wherein the timer of the RRC signaling indicates how long the RACH resource is valid.

2. The apparatus of claim 1, wherein the conditional handover command originates (320, 332) from the TBS (306) and includes an indication that the TBS (306) supports conditional handover.

3. The apparatus of claim 1, wherein the processing circuitry (402) is to:
decode (332) a second RRC signaling from the SBS (304), the second RRC signaling including a second conditional handover command, the second conditional handover command originating from a second TBS (308) and indicating a fourth threshold for the measurement event, the fourth threshold being higher than a third threshold configured for triggering a measurement report to the second TBS (308).

4. The apparatus of claim 1, wherein in response to a non-conditional handover command, an RRC connection is terminated between the UE (302) and the SBS (304), and wherein in response to the conditional handover command, an RRC connection between the UE (302) and the SBS (304) is not terminated until after the second threshold is satisfied by the measurement event.

5. The apparatus of claim 1, further comprising transceiver circuitry coupled to the processing circuitry (402);
and one or more antennas coupled to the transceiver circuitry.

6. A non-transitory computer-readable storage medium that stores instructions (424) for execution by one or more processors (402) of a source base station, SBS (304), the instructions (424) to configure the SBS (304) for conditional handover and data forwarding between the SBS and a target base station, TBS (306), in a wireless network and to cause the SBS (304) to:
encode measurement configuration information for transmission to a user equipment, UE (302), the measurement configuration information indicating a measurement event and a first threshold associated with the measurement event to trigger measurement reporting;
decode a measurement report from the UE (302);
encode radio resource control, RRC, signaling for transmission to the UE (302), the RRC signaling including a timer and a conditional handover command for handover from the SBS (304) to the TBS (306), the handover command including a random access channel, RACH, resource;
decode a notification message from the TBS (306), the notification message indicating successful completion of the handover and attachment of the UE (302) to the TBS (306);
encode UE uplink, UL, data and UE downlink, DL, data for forwarding to the TBS (306), based on the notification message; and
perform a RACH procedure with the TBS (306) during the handover, using the RACH resource;
**characterized in that**
the measurement report triggered is based on a first threshold associated with a measurement event configured by the SBS (304);
wherein the RRC signaling further includes:
a second threshold for the measurement event, the second threshold being higher than the first threshold,
an offset to indicate when the UE may exit the conditional handover; and
a time-to-trigger parameter for a condition, where the measurement has to satisfy the second threshold for a time-to-trigger amount of time; and
wherein the timer of the RRC signaling indicates how long the RACH resource is valid.

7. The non-transitory computer-readable storage medium of claim 6, wherein:
the UE UL data is data that has been received from the UE (302) but held at the SBS (304) after transmission of the handover command to the UE (302); and
the UE DL data is DL data held at the SBS (304) for transmission to the UE (302) after transmission of the handover command to the UE (302).

8. The non-transitory computer-readable storage medium of claim 7, wherein executing the instructions (424) further cause the SBS (304) to:
encode a handover request for transmission to the TBS (306), the handover request including a request for conditional handover support confirmation.

9. The non-transitory computer-readable storage medium of claim 8, wherein executing the instructions further cause the SBS to:
decode a handover acknowledgment from the TBS (306), the handover acknowledgment received in response to the handover request and including the conditional handover command for transmission to the UE (302).

10. The non-transitory computer-readable storage medium of claim 6, wherein executing the instructions (424) further cause the SBS (304) to:
decode a handover completion message from the TBS (306), the handover completion message indicating completion of the conditional handover; and
encode a resource release message for transmission to at least a second TBS (308) for releasing of resources reserved by the second TBS (308) for handover with the UE (302).

11. The non-transitory computer-readable storage medium of claim 6, wherein executing the instructions (424) further cause the SBS (304) to:
decode a second notification message from the UE (302), the second notification message indicating the successful completion of the handover and attachment of the UE (302) to the TBS (306); and
encode the UE UL data and the UE downlink DL data for forwarding to the TBS (306), based on the notification message and the second notification message.

12. The non-transitory computer-readable storage medium of claim 6, wherein executing the instructions (424) further cause the SBS (304) to:
encode a first handover request for transmission to the TBS (306), the first handover request including a first request for conditional handover support confirmation;
encode a second handover request for transmission to a second TBS, the second handover request including a second request for conditional handover support confirmation; and
decode handover acknowledgments from the TBS (306) and the second TBS (308), the handover acknowledgments received in response to the first and second handover requests and including a first conditional handover command from the TBS (306) and a second conditional handover command from the second TBS (308) for transmission to the UE (302).

13. The non-transitory computer-readable storage medium of claim 11, wherein executing the instructions further cause the SBS (304) to:
encode the RRC signaling for transmission to the UE (302), the RRC signaling including the first and second handover commands.

14. The non-transitory computer-readable storage medium of claim 13, wherein executing the instructions further cause the SBS to:
encode the UE UL data and the UE DL data for forwarding to the TBS (306) and the second TBS (308), subsequent to transmission of the RRC signaling with the first and second handover commands.

## Patentansprüche

1. Einrichtung zur Verwendung in einem Benutzergerät, UE, wobei die Einrichtung Folgendes umfasst:
eine Verarbeitungsschaltungsanordnung (402), wobei die Verarbeitungsschaltungsanordnung (402), um das UE (302) für eine bedingte Übergabe und Datenweiterleitung zwischen einer Quellenbasisstation, SBS (304), und einer Zielbasisstation, TBS (306), in einem Drahtlosnetzwerk zu konfigurieren, zu Folgendem ausgelegt ist:
Codieren (310) eines Messberichts zur Übertragung an die SBS (304);
Decodieren (320; 332) einer Funkressourcensteuerungs- bzw. RRC-Signalisierung von der SBS (304), wobei die RRC-Signalisierung einen Timer und einen bedingten Übergabebefehl beinhaltet, wobei der Übergabebefehl eine Random-Access-Channel- bzw. RACH-Ressource beinhaltet;
Durchführen (334) einer Übergabe von der SBS (304) an die TBS (306) basierend auf dem bedingten Übergabebefehl nachdem detektiert wird, dass das Messereignis eine zweite Schwelle erfüllt; und
Codieren (350) einer Benachrichtigungsnachricht zur Übertragung an die SBS (304) vor dem Durchführen einer Random-Access- bzw. RACH-Prozedur (336) und Anhängen an die TBS (306) der Benachrichtigungsnachricht, die angibt, dass das UE (302) die TBS (306) für die Übergabe ausgewählt hat, wodurch die SBS (304) veranlasst wird, Uplink- bzw. UL-Daten des UE (302) oder Downlink- bzw. DL-Daten des UE (302) an die TBS (306) weiterzuleiten (352); und
Durchführen einer RACH-Prozedur mit der TBS (306) während der Übergabe unter Verwendung der RACH-Ressource;
**dadurch gekennzeichnet, dass**
der ausgelöste Messbericht auf einer ersten Schwelle basiert, die mit einem durch die SBS (304) konfigurierten Messereignis assoziiert ist;
wobei die RRC-Signalisierung ferner Folgendes beinhaltet:
die zweite Schwelle für das Messereignis, wobei die zweite Schwelle höher als die erste Schwelle ist,
einen Offset, um anzugeben, wann das UE die bedingte Übergabe verlassen kann; und
einen Time-to-Trigger-Parameter für eine Bedingung, bei der die Messung die zweite Schwelle für eine Time-to-Trigger-Zeitdauer erfüllen muss; und
wobei der Timer der RRC-Signalisierung angibt, wie lange die RACH-Ressource gültig ist.

2. Einrichtung nach Anspruch 1, wobei der bedingte Übergabebefehl von der TBS (306) stammt (320, 332) und eine Angabe, dass die TBS (306) bedingte Übergabe unterstützt, beinhaltet.

3. Einrichtung nach Anspruch 1, wobei die Verarbeitungsschaltungsanordnung (402) zu Folgendem ausgelegt ist:
Decodieren (332) einer zweiten RRC-Signalisierung von der SBS (304), wobei die zweite RRC-Signalisierung einen zweiten bedingten Übergabebefehl beinhaltet, wobei der zweite bedingte Übergabebefehl von einer zweiten TBS (308) stammt und eine vierte Schwelle für das Messereignis angibt, wobei die vierte Schwelle höher als eine dritte Schwelle ist, die zum Auslösen eines Messberichts an die zweite TBS (308) ausgelegt ist.

4. Einrichtung nach Anspruch 1, wobei als Reaktion auf einen nicht-bedingten Übergabebefehl eine RRC-Verbindung zwischen dem UE (302) und der SBS (304) beendet wird und wobei als Reaktion auf den bedingten Übergabebefehl eine RRC-Verbindung zwischen dem UE (302) und der SBS (304) erst beendet wird, nachdem die zweite Schwelle durch das Messereignis erfüllt ist.

5. Einrichtung nach Anspruch 1, ferner umfassend eine Sendeempfängerschaltungsanordnung, die mit der Prozessorschaltungsanordnung (402) gekoppelt ist;
und eine oder mehrere Antennen, die mit der Sendeempfängerschaltungsanordnung gekoppelt sind.

6. Nichtflüchtiges computerlesbares Speichermedium, das Anweisungen (424) zur Ausführung durch einen oder mehrere Prozessoren (402) einer Quellbasisstation, SBS (304), speichert, wobei die Anweisungen (424) dazu ausgelegt sind, die SBS (304) für eine bedingte Übergabe und Datenweiterleitung zwischen der SBS und einer Zielbasisstation, TBS (306), in einem Drahtlosnetzwerk zu konfigurieren und zu bewirken, dass die SBS (304) Folgendes durchführt:
Codieren von Messkonfigurationsinformationen zur Übertragung an ein Benutzergerät, UE (302), wobei die Messkonfigurationsinformationen ein Messereignis und eine mit dem Messereignis assoziierte erste Schwelle angeben, um eine Messberichterstattung auszulösen;
Decodieren eines Messberichts von dem UE (302);
Codieren einer Funkressourcensteuerungs- bzw. RRC-Signalisierung zur Übertragung an das UE (302), wobei die RRC-Signalisierung einen Timer und einen bedingten Übergabebefehl zur Übergabe von der SBS (304) an die TBS (306) beinhaltet, wobei der Übergabebefehl eine Random-Access-Channel- bzw. RACH-Ressource beinhaltet;
Decodieren einer Benachrichtigungsnachricht von der TBS (306), wobei die Benachrichtigungsnachricht einen erfolgreichen Abschluss der Übergabe und Anbindung des UE (302) an die TBS (306) angibt;
Codieren von UE-Uplink- bzw. UE-UL-Daten und UE-Downlink- bzw. UE-DL-Daten zum Weiterleiten an die TBS (306) basierend auf der Benachrichtigungsnachricht; und
Durchführen einer RACH-Prozedur mit der TBS (306) während der Übergabe unter Verwendung der RACH-Ressource;
**dadurch gekennzeichnet, dass**
der ausgelöste Messbericht auf einer ersten Schwelle basiert, die mit einem durch die SBS (304) konfigurierten Messereignis assoziiert ist;
wobei die RRC-Signalisierung ferner Folgendes beinhaltet:
eine zweite Schwelle für das Messereignis, wobei die zweite Schwelle höher als die erste Schwelle ist,
einen Offset, um anzugeben, wann das UE die bedingte Übergabe verlassen kann; und
einen Time-to-Trigger-Parameter für eine Bedingung, bei der die Messung die zweite Schwelle für eine Time-to-Trigger-Zeitdauer erfüllen muss; und
wobei der Timer der RRC-Signalisierung angibt, wie lange die RACH-Ressource gültig ist.

7. Nichtflüchtiges computerlesbares Speichermedium nach Anspruch 6, wobei:
die UE-UL-Daten Daten sind, die von dem UE (302) empfangen wurden, jedoch nach der Übertragung des Übergabebefehls an das UE (302) an der SBS (304) gehalten wurden; und
die UE-DL-Daten DL-Daten sind, die an der SBS (304) zur Übertragung an das UE (302) nach der Übertragung des Übergabebefehls an das UE (302) gehalten werden.

8. Nichtflüchtiges computerlesbares Speichermedium nach Anspruch 7, wobei eine Ausführung der Anweisungen (424), ferner bewirkt, dass die SBS (304) Folgendes durchführt:
Codieren einer Übergabeanforderung zur Übertragung an die TBS (306), wobei die Übergabeanforderung eine Anforderung zur Bestätigung der Unterstützung von bedingter Übergabe beinhaltet.

9. Nichtflüchtiges Computerlesbares Speichermedium nach Anspruch 8, wobei eine Ausführung der Anweisungen ferner bewirkt, dass die SBS Folgendes durchführt:
Decodieren einer Übergabebestätigung von der TBS (306), wobei die Übergabebestätigung als Reaktion auf die Übergabeanforderung empfangen wird und den bedingten Übergabebefehl zur Übertragung an das UE (302) beinhaltet.

10. Nichtflüchtiges computerlesbares Speichermedium nach Anspruch 6, wobei eine Ausführung der Anweisungen (424), ferner bewirkt, dass die SBS (304) Folgendes durchführt:
Decodieren einer Übergabeabschlussnachricht von der TBS (306), wobei die Übergabeabschlussnachricht den Abschluss der bedingten Übergabe angibt; und
Codieren einer Ressourcenfreigabenachricht zur Übertragung an mindestens eine zweite TBS (308) zum Freigeben von Ressourcen, die durch die zweite TBS (308) zur Übergabe mit dem UE (302) reserviert sind.

11. Nichtflüchtiges computerlesbares Speichermedium nach Anspruch 6, wobei eine Ausführung der Anweisungen (424), ferner bewirkt, dass die SBS (304) Folgendes durchführt:
Decodieren einer zweiten Benachrichtigungsnachricht von dem UE (302), wobei die zweite Benachrichtigungsnachricht den erfolgreichen Abschluss der Übergabe und Anbindung des UE (302) an die TBS (306) angibt; und
Codieren der UE-UL-Daten und der UE-Downlink-DL-Daten zum Weiterleiten an die TBS (306) basierend auf der Benachrichtigungsnachricht und der zweiten Benachrichtigungsnachricht.

12. Nichtflüchtiges computerlesbares Speichermedium nach Anspruch 6, wobei eine Ausführung der Anweisungen (424), ferner bewirkt, dass die SBS (304) Folgendes durchführt:
Codieren einer ersten Übergabeanforderung zur Übertragung an die TBS (306), wobei die erste Übergabeanforderung eine erste Anforderung zur Bestätigung der Unterstützung von bedingter Übergabe beinhaltet;
Codieren einer zweiten Übergabeanforderung zur Übertragung an eine zweite TBS, wobei die zweite Übergabeanforderung eine zweite Anforderung zur Bestätigung der Unterstützung von bedingter Übergabe beinhaltet; und
Decodieren von Übergabebestätigungen von der TBS (306) und der zweiten TBS (308), wobei die Übergabebestätigungen als Reaktion auf die erste und die zweite Übergabeanforderung empfangen werden und einen ersten bedingten Übergabebefehl von der TBS (306) und einen zweiten bedingten Übergabebefehl von der zweiten TBS (308) zur Übertragung an das UE (302) beinhalten.

13. Nichtflüchtiges computerlesbares Speichermedium nach Anspruch 11, wobei eine Ausführung der Anweisungen ferner bewirkt, dass die SBS (304) Folgendes durchführt:
Codieren der RRC-Signalisierung zur Übertragung an das UE (302), wobei die RRC-Signalisierung den ersten und den zweiten Übergabebefehl beinhaltet.

14. Nichtflüchtiges Computerlesbares Speichermedium nach Anspruch 13, wobei eine Ausführung der Anweisungen ferner bewirkt, dass die SBS Folgendes durchführt:
Codieren der UE-UL-Daten und der UE-DL-Daten zum Weiterleiten an die TBS (306) und die zweite TBS (308) nach Übertragung der RRC-Signalisierung mit dem ersten und dem zweiten Übergabebefehl.

## Revendications

1. Appareil destiné à être utilisé dans un équipement utilisateur, UE, l'appareil comprenant :
des circuits de traitement (402), dans lequel pour configurer l'UE (302) pour un transfert intercellulaire conditionnel et un transfert de données entre une station de base source, SBS (304), et une station de base cible, TBS (306), dans un réseau sans fil, les circuits de traitement (402) doivent :
coder (310) un rapport de mesure pour transmission à la SBS (304) ;
décoder (320 ; 332) une signalisation de commande de ressources radio, RRC, provenant de la SBS (304), la signalisation RRC comprenant un temporisateur et une instruction de transfert intercellulaire conditionnel, l'instruction de transfert intercellulaire incluant une ressource de canal d'accès aléatoire, RACH ;
effectuer (334) un transfert intercellulaire de la SBS (304) à la TBS (306) sur la base de l'instruction de transfert intercellulaire conditionnel après avoir détecté que l'événement de mesure satisfait à un deuxième seuil ; et
coder (350) un message de notification pour transmission à la SBS (304) avant d'exécuter une procédure d'accès aléatoire, RACH, (336) et de la rattacher à la TBS (306), le message de notification indiquant que l'UE (302) a sélectionné la TBS (306) pour le transfert intercellulaire, de déclencher la SBS (304) pour transférer (352) des données d'UE (302) en liaison montante, UL, ou des données d'UE (302) en liaison descendante, DL, à la TBS (306) ; et
effectuer une procédure RACH avec la TBS (306) pendant le transfert intercellulaire, au moyen de la ressource RACH ;
**caractérisé en ce que**
le rapport de mesure déclenché est basé sur un premier seuil associé à un événement de mesure configuré par la SBS (304) ;
dans lequel la signalisation RRC comprend en outre :
le deuxième seuil pour l'évènement de mesure, le deuxième seuil étant supérieur au premier seuil,
un décalage pour indiquer quand l'UE peut sortir du transfert intercellulaire conditionnel ; et
un paramètre de temps de déclenchement pour une condition, dans lequel la mesure doit satisfaire le deuxième seuil pendant une durée de temps de déclenchement ; et
dans lequel le temporisateur de la signalisation RRC indique combien de temps la ressource RACH est valide.

2. Appareil selon la revendication 1, dans lequel l'instruction de transfert intercellulaire conditionnel provient (320, 332) de la TBS (306) et comprend une indication que la TBS (306) prend en charge un transfert intercellulaire conditionnel.

3. Appareil selon la revendication 1, dans lequel les circuits de traitement (402) doivent :
décoder (332) une seconde signalisation RRC provenant de la SBS (304), la seconde signalisation RRC comportant une seconde instruction de transfert intercellulaire conditionnel, la seconde instruction de transfert intercellulaire conditionnel provenant d'une seconde TBS (308) et indiquant un quatrième seuil pour l'événement de mesure, le quatrième seuil étant supérieur à un troisième seuil configuré pour déclencher un rapport de mesure à la seconde TBS (308).

4. Appareil selon la revendication 1, dans lequel, en réponse à une instruction de transfert intercellulaire non conditionnel, il est mis fin à une connexion RRC entre l'UE (302) et la SBS (304), et dans lequel, en réponse à l'instruction de transfert intercellulaire conditionnel, il n'est mis fin à une connexion RRC entre l'UE (302) et la SBS (304) qu'après que le deuxième seuil a été satisfait par l'événement de mesure.

5. Appareil selon la revendication 1, comprenant en outre des circuits d'émetteur-récepteur couplés aux circuits de traitement (402) ;
et une ou plusieurs antennes couplées aux circuits d'émetteur-récepteur.

6. Support de stockage non transitoire lisible par ordinateur qui stocke des instructions (424) destinées à être exécutées par un ou plusieurs processeurs (402) d'une station de base source, SBS (304), les instructions (424) devant configurer la SBS (304) pour un transfert intercellulaire conditionnel et un transfert de données entre la SBS et une station de base cible, TBS (306), dans un réseau sans fil et amener la SBS (304) à :
coder des informations de configuration de mesure pour transmission à un équipement utilisateur, UE (302), les informations de configuration de mesure indiquant un événement de mesure et un premier seuil associé à l'événement de mesure pour déclencher un rapport de mesure ;
décoder un rapport de mesure provenant de l'UE (302) ;
coder une signalisation de commande de ressource radio, RRC, pour transmission à l'UE (302), la signalisation RRC comprenant un temporisateur et une instruction de transfert intercellulaire conditionnel pour un transfert intercellulaire de la SBS (304) à la TBS (306), l'instruction de transfert intercellulaire incluant une ressource de canal d'accès aléatoire, RACH ;
décoder un message de notification provenant de la TBS (306), le message de notification indiquant l'achèvement réussi du transfert intercellulaire et le rattachement de l'UE (302) à la TBS (306) ;
coder des données d'UE en liaison montante, UL, et des données d'UE en liaison descendante, DL, pour le transfert à la TBS (306), sur la base du message de notification ; et
effectuer une procédure RACH avec la TBS (306) pendant le transfert intercellulaire, au moyen de la ressource RACH ;
**caractérisé en ce que**
le rapport de mesure déclenché est basé sur un premier seuil associé à un événement de mesure configuré par la SBS (304) ;
dans lequel la signalisation RRC comprend en outre :
un deuxième seuil pour l'évènement mesure, le deuxième seuil étant supérieur au premier seuil,
un décalage pour indiquer quand l'UE peut sortir du transfert intercellulaire conditionnel ; et
un paramètre de temps de déclenchement pour une condition, dans lequel la mesure doit satisfaire le deuxième seuil pendant une durée de temps de déclenchement ; et
dans lequel le temporisateur de la signalisation RRC indique combien de temps la ressource RACH est valide.

7. Support de stockage non transitoire lisible par ordinateur selon la revendication 6, dans lequel :
les données d'UE UL sont des données qui ont été reçues depuis l'UE (302) mais conservées au niveau de la SBS (304) après la transmission de l'instruction de transfert intercellulaire à l'UE (302) ; et
les données d'UE DL sont des données DL conservées au niveau de la SBS (304) pour transmission à l'UE (302) après la transmission de l'instruction de transfert intercellulaire à l'UE (302).

8. Support de stockage non transitoire lisible par ordinateur selon la revendication 7, dans lequel les instructions (424) amènent en outre la SBS (304) à :
coder une demande de transfert intercellulaire pour transmission à la TBS (306), la demande de transfert intercellulaire comprenant une demande de confirmation de prise en charge de transfert intercellulaire conditionnel.

9. Support de stockage non transitoire lisible par ordinateur selon la revendication 8, dans lequel l'exécution des instructions amène en outre la SBS à :
décoder un accusé de réception de transfert intercellulaire provenant de la TBS (306), l'accusé de réception de transfert intercellulaire étant reçu en réponse à la demande de transfert intercellulaire et incluant l'instruction de transfert intercellulaire conditionnel pour transmission à l'UE (302).

10. Support de stockage non transitoire lisible par ordinateur selon la revendication 6, dans lequel les instructions (424) amènent en outre la SBS (304) à :
décoder un message d'achèvement de transfert intercellulaire provenant de la TBS (306), le message d'achèvement de transfert intercellulaire indiquant l'achèvement du transfert intercellulaire conditionnel ; et
coder un message de libération de ressources pour transmission à au moins une seconde TBS (308) pour la libération de ressources réservées par la seconde TBS (308) pour le transfert intercellulaire avec l'UE (302).

11. Support de stockage non transitoire lisible par ordinateur selon la revendication 6, dans lequel les instructions (424) amènent en outre la SBS (304) à :
décoder un second message de notification provenant de l'UE (302), le second message de notification indiquant l'achèvement réussi du transfert intercellulaire et le rattachement de l'UE (302) à la TBS (306) ; et
coder les données d'UE UL et les données d'UE DL pour le transfert à la TBS (306), sur la base du message de notification et du second message de notification.

12. Support de stockage non transitoire lisible par ordinateur selon la revendication 6, dans lequel les instructions (424) amènent en outre la SBS (304) à :
coder une première demande de transfert intercellulaire pour transmission à la TBS (306), la première demande de transfert intercellulaire comprenant une première demande de confirmation de prise en charge de transfert intercellulaire conditionnel ;
coder une seconde demande de transfert intercellulaire pour transmission à une seconde TBS, la seconde demande de transfert intercellulaire comprenant une seconde demande de confirmation de prise en charge de transfert intercellulaire conditionnel ; et
décoder les accusés de réception de transfert intercellulaire provenant de la TBS (306) et de la seconde TBS (308), les accusés de réception de transfert intercellulaire étant reçus en réponse aux première et seconde demandes de transfert intercellulaire et comprenant une première instruction de transfert intercellulaire conditionnel provenant de la TBS (306) et une seconde instruction de transfert intercellulaire conditionnel provenant de la seconde TBS (308) pour transmission à l'UE (302).

13. Support de stockage non transitoire lisible par ordinateur selon la revendication 11, dans lequel les instructions amènent en outre la SBS (304) à :
coder la signalisation RRC pour transmission à l'UE (302), la signalisation RRC incluant les première et seconde instructions de transfert intercellulaire.

14. Support de stockage non transitoire lisible par ordinateur selon la revendication 13, dans lequel l'exécution des instructions amène en outre la SBS à :
coder les données d'UE UL et les données d'UE DL pour les transférer à la TBS (306) et à la seconde TBS (308), suite à la transmission de la signalisation RRC avec les première et seconde instructions de transfert intercellulaire.
